# FASCICULE DE BREVET EUROPEEN

(11) **EP 1 967 045 B1**
(45) Date de publication et mention de la délivrance du brevet: **05.12.2018**
(21) Numéro de dépôt: 06847149.9
(22) Date de dépôt: 27.12.2006
(51) Int. Cl.: H05B 6/12, H05B 6/36

(54) **DISPOSITIF INDUCTEUR A BOBINAGES INDIVIDUELS MULTIPLES POUR FOYER DE CUISSON PAR INDUCTION**
INDUKTORSVORRICHTUNG VERSEHEN MIT EINZIGEN MEHRWICKLUNGEN FÜR INDUKTIVEN KOCHFELDEN
INDUCTION DEVICE COMPRISING MULTIPLE INDIVIDUAL WINDINGS FOR INDUCTION HEATING PLATES

(30) Priorité: 27.12.2005 FR 0513361
(43) Date de publication de la demande: 10.09.2008
(73) Titulaire: Groupe Brandt, 92500 Rueil-Malmaison (FR)
(72) Inventeur: ROUX, Alain, F-45160 Saint-Hilaire-Saint-Mesmin (FR)
(74) Mandataire: Santarelli
(86) Numéro de dépôt international: PCT/FR2006/002888
(87) Numéro de publication internationale: WO 2007/074243

(56) Documents cités:
- EP-A- 0 580 899

## Description

La présente invention concerne un dispositif inducteur à bobinages individuels multiples pour foyer de cuisson par induction.

Elle concerne également une table de cuisson par induction équipée d'au moins un tel dispositif inducteur.

De manière générale, l'invention concerne un dispositif inducteur utilisé pour chauffer par induction des récipients culinaires, notamment dans une table de cuisson à usage domestique.

Classiquement, un dispositif inducteur comprend au moins un bobinage individuel en matériau électriquement conducteur.

Un tel bobinage individuel est constitué généralement d'un enroulement plat de fil de cuivre destiné à être alimenté, par l'intermédiaire d'un onduleur, par un courant à haute fréquence, comprise généralement entre 20 kHz et 50 kHz.

La circulation de ce courant dans le bobinage individuel a pour effet de créer un champ magnétique.

La circulation de ce champ magnétique dans un récipient culinaire placé sur un support au-dessus de l'inducteur provoque la circulation de courants induits dans le fond ferromagnétique de ce récipient. Ces courants induits ont pour effet de chauffer directement le récipient culinaire.

Il est connu d'associer le bobinage individuel à un ou plusieurs éléments conducteurs magnétiques s'étendant sous le bobinage et ayant pour fonction de focaliser le champ magnétique engendré par le bobinage individuel vers un récipient à chauffer disposé au-dessus du dispositif inducteur.

L'association de bobinages et d'éléments conducteurs magnétiques est connue du document EP 0 580 899 (NIKKO) s'appliquant à un générateur de vapeur inductif

On connaît des foyers de cuisson par induction équipés d'inducteurs constitués chacun d'un seul bobinage individuel circulaire adapté à la dimension du foyer.

On connaît aussi des foyers de cuisson équipés d'inducteurs à bobinages individuels multiples disposés côte à côte.

De telles configurations connues à éléments individuels multiples ne sont pas totalement satisfaisantes. En effet, la répartition de température dans les récipients chauffés est relativement inhomogène, notamment dans la zone située entre les bobinages individuels dans le cas de bobinages circulaires et dans les zones angulaires dans le cas de bobinages rectangulaires..

La présente invention a notamment pour but de remédier à ces inconvénients.

À cet effet, la présente invention porte sur un dispositif inducteur pour foyer de cuisson par induction, adapté à être disposé sous une plaque en vitrocéramique, comprenant au moins des premier et second bobinages individuels à enroulement électriquement conducteur, disposés l'un à côté de l'autre dans un premier plan,

Selon l'invention, il comporte un élément conducteur magnétique formant moyen de couplage s'étendant sous le premier bobinage individuel et sous le second bobinage individuel de manière à coupler magnétiquement lesdits premier et second bobinages individuels.

Ce couplage magnétique ainsi obtenu par l'élément conducteur magnétique permet d'ajouter une impédance mutuelle entre les premier et second bobinages individuels, augmentant d'autant l'impédance globale de l'inducteur.

Cette augmentation permet une diminution du nombre de spires favorisant ainsi une diminution de la quantité de cuivre et donc le coût de fabrication des bobinages individuels. Une telle diminution de matière permet également de diminuer les pertes par échauffement du bobinage puisque la longueur de fil de cuivre est plus faible.

D'autre part, un tel dispositif inducteur selon l'invention permet d'améliorer la répartition de température dans le récipient chauffé grâce aux courants induits supplémentaires à l'endroit du couplage magnétique ainsi réalisé entre les deux bobines.

En pratique, l'élément conducteur magnétique est un élément monobloc ou est scindé en deux parties séparées par un entrefer.

Dans ce dernier cas, l'entrefer est inférieur ou égal à 5 mm de manière à permettre le couplage entre les deux bobines par l'intermédiaire de l'élément conducteur magnétique en deux parties.

En pratique, plus l'entrefer est élevé, plus le couplage magnétique diminue. Ainsi, avec un entrefer sensiblement nul, le couplage magnétique est maximum.

Selon une caractéristique pratique de l'invention, l'élément conducteur magnétique s'étend suivant une direction confondue avec un axe passant par les centres desdits premier et second bobinages.

Alternativement, l'élément conducteur magnétique s'étend suivant une direction décalée par rapport à l'axe passant par les centres desdits premier et second bobinages.

Cette disposition permet de décaler le champ magnétique généré par exemple vers la périphérie des bobinages afin d'engendrer des courants induits sur une zone plus importante du foyer de cuisson.

Dans un mode de réalisation, les enroulements électriquement conducteurs des premier et second bobinages individuels ne sont pas parallèles entre eux.

La présente invention est particulièrement avantageuse dans ce cas particulier car, lorsque les enroulements électriquement conducteurs d'un bobinage individuel sont non parallèles aux enroulements électriquement conducteurs du bobinage individuel voisin, le couplage magnétique naturel entre ces deux bobinages individuels est relativement mauvais

Tel est le cas notamment avec des bobinages en forme de disque, à enroulement en spirale.

De préférence, les premier et second bobinages individuels sont polarisés en sens opposé, ce qui permet d'obtenir une augmentation maximale de l'impédance globale du système.

Par exemple, les premier et second bobinages individuels sont connectés en série.

En pratique, le matériau constitutif des éléments conducteurs magnétiques est de la ferrite, de forme choisie qui peut être carrée, rectangulaire, disposée en losange ou en hexagone.

La présente invention concerne également une table de cuisson par induction, comprenant au moins un foyer de cuisson et une plaque en vitrocéramique.

Conformément à l'invention, cette table de cuisson comprend un dispositif inducteur tel que décrit précédemment associé audit foyer de cuisson.

D'autres caractéristiques et avantages de l'invention apparaîtront à la lumière de la description détaillée ci-après et des dessins dans lesquels :
- la **figure 1** est une vue en coupe transversale d'une table de cuisson conforme à l'invention ;
- la **figure 2** est une vue de dessous selon le plan II.II à la **figure 1** d'un dispositif inducteur conforme à un mode de réalisation de l'invention ;
- la **figure 3** représente la répartition du chauffage d'un foyer de l'art antérieur composé de deux bobinages individuels sans couplage magnétique ;
- la **figure 4** représente schématiquement la répartition du chauffage d'un foyer composé de deux bobinages individuels de la **figure 1** selon l'invention ;
- la **figure 5** est un exemple de foyer à quatre bobines individuelles couplées magnétiquement avec entrefer selon un second mode de réalisation de l'invention ;
- la **figure 6** est un autre exemple de foyer à trois bobines couplées magnétiquement sans entrefer selon un troisième mode de réalisation de l'invention ;
- la **figure 7** est un exemple de foyer de cuisson équipé de bobinages individuels de forme circulaire ;
- la **figure 8a** est un autre exemple de foyer à trois bobines couplées magnétiquement sans entrefer selon un quatrième mode de réalisation de l'invention
- la **figure 8b** représente schématiquement la répartition du chauffage d'un foyer composé de trois bobinages individuels de la **figure 8a** **;**
- la **figure 9a** est un autre exemple de foyer à trois bobines couplées magnétiquement sans entrefer selon un cinquième mode de réalisation de l'invention ;
- la **figure 9b** représente schématiquement la répartition du chauffage d'un foyer composé de trois bobinages individuels de la **figure 9a****;**
- la **figure 10** est un autre exemple de foyer à trois bobines couplées magnétiquement sans entrefer selon un sixième mode de réalisation de l'invention ; et
- la **figure 11** est un exemple de foyer à deux bobines couplées magnétiquement sans entrefer selon un septième mode de réalisation de l'invention.

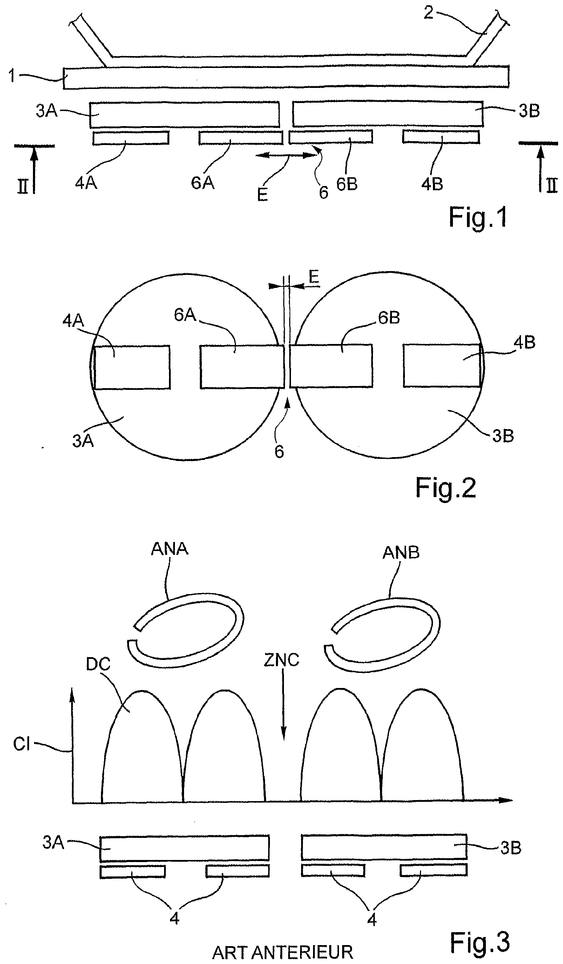

On va décrire tout d'abord en référence aux **figures 1** et **2****,** une table de cuisson par induction conforme à un mode de réalisation de la présente invention.

Classiquement, une telle plaque de cuisson comporte une plaque en vitrocéramique 1 formant support pour un récipient de cuisson 2, sous laquelle sont disposés un ou plusieurs dispositifs inducteurs (ici au nombre de 1).

De préférence, une telle plaque de cuisson par induction comprend au moins deux foyers de cuisson, et de préférence quatre foyers de cuisson, associés respectivement à un inducteur.

L'inducteur comprend de façon classique au moins deux bobinages 3A, 3B et constitués chacun d'un enroulement conducteur électrique.

Chaque bobinage individuel 3A, 3B peut être constitué d'un enroulement à plat, en spirale, d'un toron multibrin de fils de cuivre. Ici (**figure 2**) chaque bobinage individuel 3A, 3B est en forme de disque.

Les fils de cuivre sont isolés électriquement et individuellement par une couche de verni (non représentée).

Comme bien illustré à la figure 3, dans les tables à induction connue, des éléments conducteurs magnétiques 4 sont posés ou collés parallèlement au plan des bobinages individuels 3A, 3B, sous chaque bobinage 3A, 3B.

De manière connue, les éléments conducteurs magnétiques 4 sont des barreaux de ferrite, disposés radialement sur le bobinage individuel 3A, 3B associé en forme de disque.

A titre d'exemple non limitatif, à chaque bobinage individuel 3A, 3B sont associés deux barreaux de ferrite 4 disposés suivant des rayons à 180° les uns des autres.

Ces éléments conducteurs magnétiques 4 ont pour rôle de focaliser le champ magnétique engendré par le bobinage 3A, 3B associé lors du passage d'un courant à haute fréquence, du type 20 à 50 kHz.

Le champ magnétique est ainsi focalisé en direction du récipient de cuisson 2 à chauffer.

Les éléments conducteurs magnétiques 4 sont ainsi disposés dans un plan parallèle au plan du bobinage 3A, 3B, et en dessous de ce bobinage lorsque le dispositif inducteur est placé sous le plan de cuisson en vitrocéramique 1.

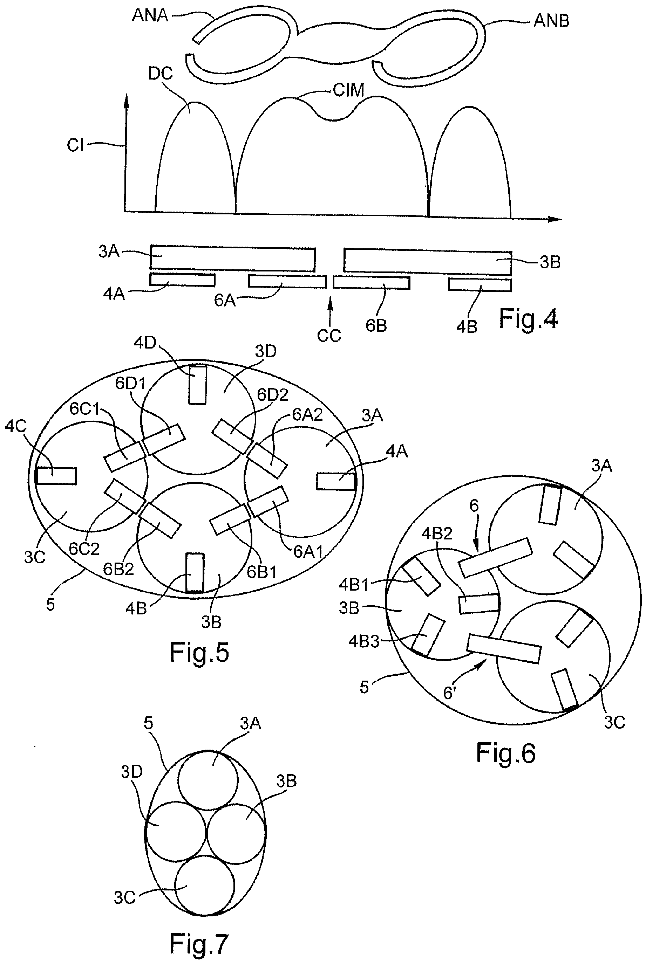

En référence à la **figure 7****,** le foyer de cuisson est constitué de plusieurs petits bobinages individuels 3 disposés de façon à remplir au mieux la surface du foyer de cuisson 5. Ces bobines 3 peuvent être de forme circulaire (**figure 7**). Le foyer de cuisson ainsi formé peut être corollairement de forme circulaire, par exemple lorsque trois bobinages individuels sont associés au foyer (**figure 6**), ou de forme elliptique lorsque deux ou quatre bobinages individuels sont associés au foyer (**figure 2** **ou** **5**).

On fait à nouveau référence aux **figures 1** et **2****.**

Selon l'invention, le dispositif inducteur comprend en outre au moins un élément conducteur magnétique 6 formant moyen de couplage entre les deux bobinages 3A, 3B. Cet élément conducteur magnétique 6 s'étend à la fois sous le premier bobinage individuel 3A et sous le second bobinage individuel 3B afin de connecter magnétiquement au moins ces deux bobinages individuels 3A, 3B disposés côte à côte.

Cet élément conducteur magnétique 6 est réalisé en un matériau analogue à celui utilisé pour les éléments conducteurs magnétiques 4 décrits précédemment, et par exemple en ferrite.

Il permet d'assurer un couplage magnétique entre les bobinages, soit avec entrefer, soit sans entrefer.

En référence à la **figure 1****,** on a représenté un exemple de couplage magnétique avec entrefer, dans lequel le barreau 6 est scindé en deux parties 6A, 6B séparées par un entrefer E.

Dans ce mode de réalisation, une partie de barreau 6A s'étend au delà du premier bobinage 3A d'une part et l'autre partie de barreau 6B s'étend au delà du second bobinage 3B d'autre part. Les deux parties de barreau 6A, 6B sont alignées et en regard l'une de l'autre, à une distance choisie. Cette distance est l'entrefer E.

Le couplage magnétique entre les bobines 3A et 3B peut être réglé en choisissant la valeur de l'entrefer E. Avec un entrefer E nul, le couplage magnétique est maximum. Plus l'entrefer E est élevé, plus le couplage magnétique diminue. Le Demandeur a ainsi observé qu'un couplage magnétique est obtenu de manière satisfaisante avec une valeur d'entrefer inférieure ou égale à 5 mm, et de préférence inférieure à 4 mm. Un couplage magnétique peut être optimisé avec un entrefer compris entre 1 et 2 mm.

Les bobinages 3A et 3B ainsi couplés magnétiquement sont avantageusement polarisés en sens opposé, de manière à augmenter l'impédance globale de l'inducteur.

Lorsque les bobines 3A et 3B ont respectivement une impédance électrique complexe Z_{A} et Z_{B}, la valeur totale de l'impédance lorsque ces deux bobines sont connectées en série est égale à Z_{A} + Z_{B} si le couplage magnétique est nul, par exemple à cause d'un entrefer E de forte valeur (**figure 3**). Une absence couplage entre des éléments conducteurs magnétiques 4 disposés en vis-à-vis est ainsi observée si l'entrefer est élevé, et par exemple de l'ordre de 10 mm.

Selon l'invention, avec un couplage magnétique non nul, il existe une impédance mutuelle supplémentaire Z_{AB} venant s'ajouter aux impédances des bobines individuelles seules. Soit au total, on dispose d'une impédance électrique égale à Z_{A} + Z_{B} + Z_{AB}.

A titre d'exemple non limitatif, le Demandeur a observé que pour des bobines circulaires de diamètre d'environ 100 mm, de dix-huit spires chacune, et de trois barreaux de ferrite par bobine, le couplage magnétique est relativement satisfaisant lorsque les deux parties d'élément conducteur magnétique 6A, 6B sont séparées l'une de l'autre d'un entrefer E inférieur à 5 mm.

Cette observation a été effectuée avec des barreaux de ferrite rectangulaires (42 x 23 x 4 mm) et un courant de mesure de 0,2 A à une fréquence de 25 KHz. Par exemple, les mesures obtenues sont les suivantes :
- impédance d'une bobine individuelle seule : 3,32 ohm ;
- impédance de deux bobines sans couplage : 6,64 ohm ;
- impédance de deux bobines avec couplage et entrefer E = 4 mm : 6,68 ohm ;
- impédance de deux bobines avec couplage et entrefer E = 2 mm : 6,71 ohm ;
- impédance de deux bobines avec couplage et entrefer E = 1 mm : 6,77 ohm ;
- impédance de deux bobines avec couplage et entrefer E = 0 mm : 6,85 ohm ;

En référence à la **figure 5****,** on a représenté un exemple de foyer, dans lequel le couplage est dit « à entrefer », à quatre bobines individualisées en 3A à 3D. Dans cet exemple, les bobines 3A et 3B sont couplées magnétiquement par des parties d'élément conducteur magnétique 6A1 et 6B1 qui s'étendent respectivement au delà de leur bobinage associé 3A et 3B jusqu'à être très proche l'une de l'autre. Il en est de même de la bobine 3B avec la bobine 3C couplées magnétiquement par des parties d'élément conducteur magnétique 6B2 et 6C2 qui s'étendent respectivement au delà de leur bobinage associé 3B et 3C. Il en est encore de même de la bobine 3C avec la bobine 3D couplées magnétiquement par l'intermédiaire des parties d'élément conducteur magnétique 6C1 et 6D1, qui s'étendent respectivement au delà de leur bobinage associé 3C et 3D. Enfin, la bobine 3D et la bobine 3A sont couplées magnétiquement par des parties d'élément conducteur magnétique 6D2 et 6A2, qui s'étendent respectivement au delà de leur bobinage associé 3D et 3A. On remarquera également que l'inducteur peut comprendre des éléments conducteurs magnétiques isolés 4A, 4B, 4C et 4D qui ne jouent pas un rôle de moyen de couplage entre les bobinages, mais focalisent le champ magnétique généré par les bobinages.

Bien que dans cet exemple, les parties d'élément conducteur magnétique 6Ai, 6Bi, 6Ci, 6Di, i égal 1 ou 2, s'étendent au-delà des bobinages 3A, 3B, 3C, 3D, le Demandeur a également observé que si les deux bobines individuelles sont relativement proches l'une de l'autre (par exemple ≤ 5 mm) et si l'entrefer E a la même valeur que la distance entre les deux bobines individuelles, les deux parties d'élément conducteur magnétique 6A, 6B peuvent ne pas s'étendre respectivement au delà de leur bobinage individuel associé 3A et 3B. Un tel couplage magnétique obtenu uniquement à l'aide d'un entrefer de valeur choisie (c'est-à-dire sans étendre les éléments conducteurs magnétiques au delà de leur bobinage associé) peut notamment être mis en oeuvre lorsque les éléments électriquement conducteurs des bobinages 3 ne sont pas parallèles entre eux dans la zone de couplage.

En référence à la **figure 6****,** on a représenté une variante du couplage magnétique appelée « sans entrefer ». Le couplage magnétique de la **figure 6** provient d'un élément conducteur magnétique 6, 6' d'un seul tenant (c'est-à-dire monobloc et non constitué de deux parties séparées l'une de l'autre par l'entrefer E) qui s'étend sous les deux bobinages à coupler.

Par exemple, la bobine 3A est couplée magnétiquement avec la bobine 3B par l'intermédiaire de l'élément conducteur magnétique 6 qui s'étend sous le bobinage 3A et sous le bobinage 3B.

Dans ce mode de réalisation où le dispositif inducteur comporte un troisième bobinage 3C, les bobinages 3C et 3B sont aussi couplées magnétiquement par l'intermédiaire d'un second élément conducteur magnétique 6' sans entrefer qui s'étend sous le bobinage 3B et sous le bobinage 3C pour réaliser le couplage magnétique entre les bobines 3C et 3B.

La position de l'élément conducteur magnétique 6, 6' dans le cas du couplage sans entrefer a un effet négligeable sur l'impédance mutuelle. Dans ces conditions, l'élément conducteur magnétique 6, 6' peut être disposé au milieu des deux bobines de façon symétrique ou décalée vers l'une ou l'autre de façon asymétrique (**figure 6**).

La disposition de l'élément conducteur magnétique 6, 6' au milieu des bobinages de façon symétrique ou asymétrique, permet de distribuer le champ magnétique de façon plus ou moins uniforme sur toute la zone du foyer.

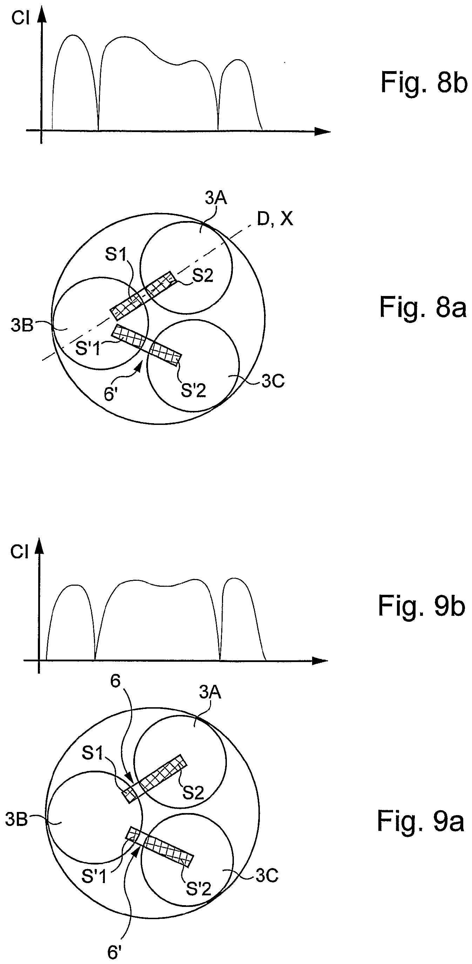

Comme illustré à la **figure 8a****,** dans le cas d'un foyer avec trois bobines, deux des trois bobines 3A, 3C sont polarisées dans le même sens et la dernière bobine 3B dans le sens contraire. Le couplage se réalisant entre deux bobinages polarisés en sens opposé, le bobinage 3B dont la polarité est unique est couplé aux deux autres. Ainsi le bobinage 3B dont la polarité est unique a deux couplages et les deux autres bobinages 3A, 3C ont un seul couplage.

Si les éléments conducteurs magnétiques formant moyens de couplage 6, 6' sont disposés de façon symétrique, l'intensité du champ magnétique du bobinage 3B dont la polarité est unique, est supérieure. Ainsi, le champ magnétique n'est pas uniforme sur toute la zone du foyer (voir **figure 8b**), produisant sur le foyer des points plus chauds que d'autres.

Afin de mieux répartir le champ magnétique (**figure 9b**), les éléments conducteurs magnétiques 6, 6' sont disposés de façon asymétrique comme illustré dans le mode de réalisation de la **figure 9a****.** Par exemple, la portion de surface S1 de l'élément conducteur magnétique 6 recouverte par un premier bobinage 3B est inférieure à la portion de surface S2 de l'élément conducteur magnétique 6 recouverte par un second bobinage 3A.

De même, la portion de surface S'1 de l'élément conducteur magnétique 6' recouverte par le premier bobinage 3B est inférieure à la portion de surface S'2 de l'élément conducteur magnétique 6' recouverte par un troisième bobinage 3C.

Cette disposition est particulièrement bien adaptée pour uniformiser le champ magnétique lorsque le premier bobinage 3B, de polarité unique, est couplé deux fois, respectivement avec chacun des deux autres bobinages de polarité opposée 3A, 3C.

Dans les exemples illustrés aux **figures 8a et 9a****,** les éléments conducteurs magnétiques 6, 6' formant moyens de couplage s'étendent suivant une direction D confondue avec un axe X passant par les centres des bobinages ainsi couplés 3A, 3B et 3C, 3B.

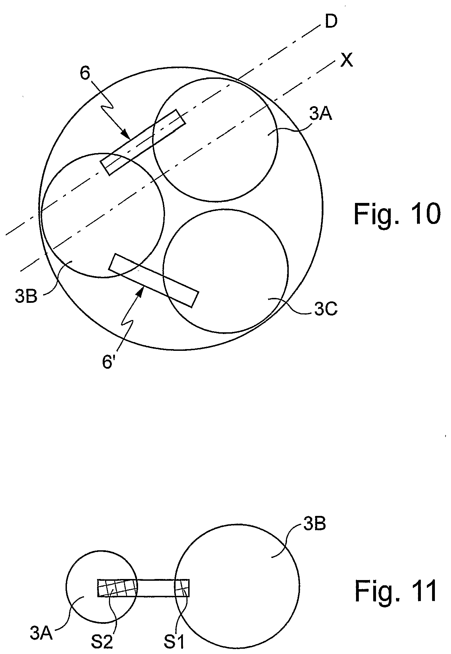

Alternativement, on a illustré à la **figure 10****,** un autre mode de réalisation dans lequel les éléments conducteurs magnétiques 6, 6' s'étendent suivant une direction D décalée par rapport à l'axe X passant par les centres des bobinages ainsi couplés 3A, 3B et 3C, 3B.

Ainsi, le champ magnétique est élargi en périphérie des bobinages 3A, 3B, 3C et par conséquent des courants sont induits sur une zone plus importante du foyer de cuisson, et donc sur une zone plus importante du récipient à chauffer.

On a illustré à la **figure 11****,** un autre mode de réalisation d'un dispositif inducteur de l'invention dans lequel deux bobinages 3A, 3B de taille différente sont utilisés. Par exemple, un premier bobinage 3B est de dimensions supérieures aux dimensions du second bobinage 3A. Par exemple, le premier bobinage 3B est de diamètre supérieur au diamètre du second bobinage 3A.

Afin également d'uniformiser le champ magnétique généré, l'élément conducteur magnétique formant moyen de couplage 6 est disposé de façon asymétrique sous les deux bobinages. Par exemple, la portion de surface S1 recouverte par le premier bobinage 3B de dimensions supérieures est inférieure à la portion de surface S2 recouverte par le second bobinage 3A.

De manière plus générale, le Demandeur a observé que la disposition et/ou les dimensions, notamment la longueur et/ou la largeur de l'élément conducteur magnétique 6 dans le cas du couplage avec ou sans entrefer déterminent la valeur dudit couplage.

En pratique, plus la longueur et/ou la largeur de l'élément conducteur magnétique 6 est grande, meilleur est le couplage magnétique et plus l'impédance mutuelle est élevée.

La forme des éléments conducteurs magnétiques 6, 6' peut aussi être variée : carrée, rectangulaire, disposés en losange ou en hexagone.

Par exemple, le Demandeur a observé que le couplage maximal (avec des éléments de mêmes dimensions que celles du couplage avec entrefer) correspond à une impédance de 6,82 ohms avec un élément conducteur magnétique de 84 mm (42 x 2).

À une ferrite de 79 mm correspond une impédance de 6,81 ohms, à une ferrite de 64 mm correspond une impédance de 6,61 ohms et à une ferrite de 54 mm correspond une impédance de 6,47 ohms. En d'autres termes, plus la longueur de la ferrite dans la zone de couplage est grande, meilleur est le couplage.

La présente invention procure de nombreux avantages par rapport à l'art antérieur dans lequel les bobinages individuels 3 ne sont pas couplés magnétiquement par des éléments conducteurs magnétiques 4.

En premier lieu, l'impédance globale du foyer formé de plusieurs bobines couplées magnétiquement conformément à l'invention est augmentée, ce qui permet de diminuer le nombre de spires et donc la quantité de cuivre pour une configuration équivalente sans couplage. L'impédance d'une bobine est proportionnelle au nombre de spires. Par exemple, pour un système à trois bobines identiques ayant une impédance globale Z_{G}, chaque bobine indépendante a une impédance individuelle Z_{A} = Z_{B} =Z_{C} = Z_{G}/3 dans le cas où les éléments électriquement conducteurs ne sont pas parallèles entre eux, conformément à l'art antérieur.

Selon l'invention, dans le cas où il existe un couplage magnétique Z_{AB} entre les bobines 3A et 3B et un couplage magnétique Z_{BC} entre les bobines 3B et 3C, l'impédance globale Z_{G} est alors égale à Z_{G} = Z_{A} + Z_{B} + Z_{C} + Z_{AB} + Z_{BC}, soit Z_{A} = Z_{B} = Z_{C} = (Z - Z_{AB} - Z_{BC})/3. Il en résulte que l'impédance globale Z_{G} est inférieure en présence d'un couplage magnétique conformément à l'invention par rapport à une impédance globale Z_{G} dépourvue de couplage magnétique entre les bobines individuelles. La quantité de cuivre plus faible permet par conséquent un gain sur le prix du foyer.

La diminution du nombre de spires engendre également une diminution de la longueur de fil de cuivre ce qui diminue par conséquent les pertes par échauffement des bobines. Cet avantage permet de faire fonctionner le foyer plus longtemps grâce à une atteinte de la température maxi avec un temps plus long. En variante, une telle diminution permet de diminuer la section du fil de cuivre pour travailler à perte constante. Cet avantage permet de faire fonctionner le foyer avec une plus forte puissance.

Le couplage entre les bobines selon l'invention (avec ou sans entrefer) permet en outre d'améliorer la répartition de température dans le récipient chauffé comme illustré de manière comparative en référence aux **figures 3** et **4****.** En effet, réchauffement du récipient est lié aux courants induits Cl dans l'épaisseur du fond dudit récipient. Les bobinages circulaires 3A, 3B induisent des courants circulaires dont la densité maximale DC se situe à proximité du demi-rayon des bobines. Ceci engendre des échauffements en forme d'anneau AN. Lorsque les bobines 3A et 3B ne sont pas couplées magnétiquement, par exemple à cause d'un entrefer de forte valeur (**figure 3**), la zone séparant lesdites bobines correspond à une zone relativement non chauffée ZNC. Avec un couplage magnétique conforme à l'invention (en **figure 4****),** le couplage magnétique entre les éléments 6A et 6B résulte d'un couplage avec entrefer de valeur choisie pour obtenir le couplage magnétique souhaité) entre les deux bobines individuelles 3A et 3B, des courants induits supplémentaires CIM sont en plus générés à l'endroit du couplage magnétique CC, ce qui augmente d'autant la surface de chauffe.

L'ajustement de la valeur du couplage magnétique avec ou sans entrefer respectivement obtenu par le réglage de l'entrefer et/ou les dimensions et/ou la position de l'élément conducteur magnétique détermine la valeur des courants induits supplémentaires CIM afin d'obtenir une répartition optimale de la température dans les récipients chauffés.

## Revendications

1. Dispositif inducteur pour foyer de cuisson par induction, adapté à être disposé sous une plaque en vitrocéramique (1), comprenant au moins des premier et second bobinages individuels (3A et 3B) à enroulement électriquement conducteur, disposés l'un à côté de l'autre dans un premier plan, **caractérisé en ce qu'**il comporte un élément conducteur magnétique (6) formant moyen de couplage s'étendant sous le premier bobinage individuel (3A) et sous le second bobinage individuel (3B) de manière à coupler magnétiquement lesdits premier et second bobinages individuels (3A et 3B).

2. Dispositif selon la revendication 1, **caractérisé en ce que** l'élément conducteur magnétique (6) est un élément monobloc.

3. Dispositif selon la revendication 1, **caractérisé en ce que** l'élément conducteur magnétique (6) est scindé en deux parties (6A, 6B) séparées par un entrefer (E).

4. Dispositif selon la revendication 3, **caractérisé en ce que** l'entrefer (E) est inférieur ou égale à 5 mm.

5. Dispositif selon l'une des revendications 3 ou 4, **caractérisé en ce que** les deux parties (6A et 6B) de l'élément conducteur magnétique s'étendent au delà respectivement des premier et second bobinages individuels (3A et 3B).

6. Dispositif selon l'une des revendications 1 à 5, **caractérisé en ce que** l'élément conducteur magnétique (6 ; 6') s'étend suivant une direction (D) confondue avec un axe (X) passant par les centres desdits premier et second bobinages (3A, 3B ; 3B, 3C).

7. Dispositif selon l'une des revendications 1 à 5, **caractérisé en ce que** l'élément conducteur magnétique (6 ; 6') s'étend suivant une direction (D) décalée par rapport à l'axe (X) passant par les centres desdits premier et second bobinages (3A, 3B ; 3B, 3C).

8. Dispositif selon l'une des revendications 1 à 7, **caractérisé en ce que** la portion de surface (S1 ; S'1) de l'élément conducteur magnétique (6 ; 6') recouverte par le premier bobinage (3B) est inférieure à la portion de surface (S2 ; S'2) de l'élément conducteur magnétique (6 ;6') recouverte par le second bobinage (3A ; 3C).

9. Dispositif selon l'une des revendications 1 à 8, **caractérisé en ce que** le premier bobinage (3B) est de dimensions supérieures aux dimensions du second bobinage (3A).

10. Dispositif selon l'une des revendications 1 à 8, **caractérisé en ce qu'**il comporte au moins un troisième bobinage (3C) et au moins un second élément conducteur magnétique (6') formant moyen de couplage s'étendant sous le premier bobinage (3B) et sous le troisième bobinage (3C).

11. Dispositif selon l'une quelconque des revendications précédentes, **caractérisé en ce que** les enroulements électriquement conducteurs des bobinages individuels (3A, 3B) ne sont pas parallèles entre eux.

12. Dispositif selon l'une des revendications 1 à 11, **caractérisé en ce que** les premier et second bobinages individuels (3A, 3B) sont polarisés en sens opposé.

13. Dispositif selon l'une quelconque des revendications précédentes, **caractérisé en ce que** les premier et second bobinages individuels (3A, 3B) sont connectés en série.

14. Dispositif selon l'une quelconque des revendications précédentes, **caractérisé en ce que** les premier et second bobinages individuels (3A, 3B) s'étendent chacun dans un disque.

15. Dispositif selon l'une des revendications 1 à 14, **caractérisé en ce que** le matériau du ou des éléments conducteurs magnétiques (6, 6') formant moyen de couplage est de la ferrite.

16. Table de cuisson par induction, comprenant au moins un foyer de cuisson (5) et une plaque en vitrocéramique (1), **caractérisée en ce qu'**elle comprend un dispositif inducteur conforme à l'une des revendications 1 à 15 associé audit foyer de cuisson.

## Patentansprüche

1. Induktorvorrichtung für Induktionskochstelle, die dazu geeignet ist, unter einer Glaskeramikplatte (1) angeordnet zu werden, enthaltend zumindest eine erste und eine zweite Einzelspule (3A und 3B) mit elektrisch leitender Wicklung, die in einer ersten Ebene nebeneinander angeordnet sind, **dadurch gekennzeichnet, dass** sie ein magnetisch leitendes Element (6) enthält, das eine Kopplungseinrichtung bildet und sich unter der ersten Einzelspule (3A) und unter der zweiten Einzelspule (3B) so erstreckt, dass sie die erste und die zweite Einzelspule (3A und 3B) magnetisch koppelt.

2. Vorrichtung nach Anspruch 1, **dadurch gekennzeichnet, dass** das magnetisch leitende Element (6) ein einstückig ausgeführtes Element ist.

3. Vorrichtung nach Anspruch 1, **dadurch gekennzeichnet, dass** das magnetisch leitende Element (6) in zwei durch einen Luftspalt (E) getrennte Teile (6A, 6B) unterteilt ist.

4. Vorrichtung nach Anspruch 3, **dadurch gekennzeichnet, dass** der Luftspalt (E) kleiner oder gleich 5 mm ist.

5. Vorrichtung nach einem der Ansprüche 3 oder 4, **dadurch gekennzeichnet, dass** die beiden Teile (6A und 6B) des magnetisch leitenden Elements sich jeweils über die erste bzw. zweite Einzelspule (3A bzw. 3B) hinaus erstrecken.

6. Vorrichtung nach einem der Ansprüche 1 bis 5, **dadurch gekennzeichnet, dass** das magnetisch leitende Element (6; 6') sich in einer Richtung (D) erstreckt, die mit einer Achse (X) zusammenfällt, die durch die Mitten der ersten und der zweiten Spule (3A, 3B; 3B, 3C) verläuft.

7. Vorrichtung nach einem der Ansprüche 1 bis 5, **dadurch gekennzeichnet, dass** das magnetisch leitende Element (6; 6') sich in einer Richtung (D) erstreckt, die bezüglich der Achse (X) versetzt ist, die durch die Mitten der ersten und der zweiten Spule (3A, 3B; 3B, 3C) verläuft.

8. Vorrichtung nach einem der Ansprüche 1 bis 7, **dadurch gekennzeichnet, dass** der von der ersten Spule (3B) bedeckte Flächenabschnitt (S1; S'1) des magnetisch leitenden Elements (6; 6') kleiner als der von der zweiten Spule (3A; 3C) bedeckte Flächenabschnitt (S2; S'2) des magnetisch leitenden Elements (6; 6') ist.

9. Vorrichtung nach einem der Ansprüche 1 bis 8, **dadurch gekennzeichnet, dass** die erste Spule (3B) größere Abmessungen hat als die Abmessungen der zweiten Spule (3A).

10. Vorrichtung nach einem der Ansprüche 1 bis 8, **dadurch gekennzeichnet, dass** sie zumindest eine dritte Spule (3C) und zumindest ein zweites magnetisch leitendes Element (6') enthält, das eine Kopplungseinrichtung bildet und sich unter der ersten Spule (3B) und unter der dritten Spule (3C) erstreckt.

11. Vorrichtung nach einem der vorangehenden Ansprüche, **dadurch gekennzeichnet, dass** die elektrisch leitenden Wicklungen der Einzelspulen (3A, 3B) nicht parallel zueinander verlaufen.

12. Vorrichtung nach einem der Ansprüche 1 bis 11, **dadurch gekennzeichnet, dass** die erste und die zweite Einzelspule (3A, 3B) gegensinnig polarisiert sind.

13. Vorrichtung nach einem der vorangehenden Ansprüche, **dadurch gekennzeichnet, dass** die erste und die zweite Einzelspule (3A, 3B) in Reihe verbunden sind.

14. Vorrichtung nach einem der vorangehenden Ansprüche, **dadurch gekennzeichnet, dass** die erste und die zweite Einzelspule (3A, 3B) jeweils in einer Scheibe verlaufen.

15. Vorrichtung nach einem der Ansprüche 1 bis 14, **dadurch gekennzeichnet, dass** das Material des bzw. der eine Kopplungseinrichtung bildenden magnetisch leitenden Elemente (6, 6') Ferrit ist.

16. Induktionskochfeld, enthaltend zumindest eine Kochstelle (5) und eine Glaskeramikplatte (1), **dadurch gekennzeichnet, dass** es eine der Kochstelle zugeordnete Induktorvorrichtung nach einem der Ansprüche 1 bis 15 enthält.

## Claims

1. An inductor device for an induction cooking unit, adapted to be disposed under a glass-ceramic plate (1), comprising at least first and second individual coils (3A and 3B) having electrically conducting winding, disposed beside each other in a first plane, **characterized in that** it comprises a magnetic conducting element (6) forming a coupling means extending under the first individual coil (3A) and under the second individual coil (3B) so as to magnetically couple said first and second individual coils (3A and 3B).

2. A device according to claim 1, **characterized in that** the magnetic conducting element (6) is a one-piece member.

3. A device according to claim 1, **characterized in that** the magnetic conducting element (6) is divided into two parts (6A, 6B) separated by a gap (E).

4. A device according to claim 3, **characterized in that** the gap (E) is less than or equal to 5 mm.

5. A device according to one of claims 3 or 4, **characterized in that** the two parts (6A and 6B) of the magnetic conducting element extend beyond respectively the first and second individual coils (3A and 3B).

6. A device according to one of claims 1 to 5, **characterized in that** the magnetic conducting element (6; 6') extends in a direction (D) coinciding with an axis (X) passing through the centers of said first and second coils (3A, 3B; 3B, 3C).

7. A device according to one of claims 1 to 5, **characterized in that** the magnetic conducting element (6 ; 6') extends in a direction (D) offset relative to the axis (X) passing by the centers of said first and second coils (3A, 3B; 3B, 3C).

8. A device according to one of claims 1 to 7, **characterized in that** the portion of surface area (S1; S'1) of the magnetic conducting element (6; 6') covered by the first coil (3B) is less than the portion of surface area (S2; S'2) of the magnetic conducting element (6; 6') covered by the second coil (3A; 3C).

9. A device according to one of claims 1 to 8, **characterized in that** the first coil (3B) is of greater dimensions than the dimensions of the second coil (3A).

10. A device according to one of claims 1 to 8, **characterized in that** it comprises at least a third coil (3C) and at least a second magnetic conducting element (6') forming a coupling means extending under the first coil (38) and under the third coil (3C).

11. A device according to any one of the preceding claims, **characterized in that** the electrically conducting windings of the individual coils (3A, 3B) are not parallel to each other.

12. A device according to one of claims 1 to 11, **characterized in that** the first and second individual coils (3A, 3B) are oppositely polarized.

13. A device according to any one of the preceding claims, **characterized in that** the first and second individual coils (3A, 38) are connected in series.

14. A device according to any one of the preceding claims, **characterized in that** the first and second individual coils (3A, 38) each extend in a disc.

15. A device according to one of claims 1 to 14, **characterized in that** the material of the magnetic conducting element or elements (6, 6') forming a coupling means is ferrite.

16. An induction cooktop, comprising at least one cooking unit (5) and a glass-ceramic plate (1), **characterized in that** it comprises an inductor device in accordance with one of claims 1 to 15 associated with said cooking unit.
